Europäisches Patentamt

(19) European Patent Office

Office européen des brevets

(11) Numéro de publication : **0 323 787 B1**

## (12) FASCICULE DE BREVET EUROPEEN

(45) Date de publication du fascicule du brevet :
**14.08.91 Bulletin 91/33**

(21) Numéro de dépôt : **88403363.0**

(22) Date de dépôt : **29.12.88**

(51) Int. Cl.⁵ : **B24B 13/005**

(54) **Appareil de centrage et de glantage pour lentille ophtalmique.**

(30) Priorité : **29.12.87 FR 8718286**

(43) Date de publication de la demande :
**12.07.89 Bulletin 89/28**

(45) Mention de la délivrance du brevet :
**14.08.91 Bulletin 91/33**

(84) Etats contractants désignés :
**DE ES GB IT**

(56) Documents cités :
**US-A- 2 734 322**
**US-A- 3 586 448**

(73) Titulaire : **ESSILOR INTERNATIONAL, Cie
Générale d'Optique
1 Rue Thomas Edison, Echat 902
F-94028 Créteil Cédex (FR)**

(72) Inventeur : **Gaudel, Jean-Claude
15, Avenue Guynemer
F-94500 Champigny-sur-Marne (FR)**
Inventeur : **Michel, Tony
Résidence Sainte Agathe Batiment E No. 7
F-60800 Crepy-en-Valois (FR)**

(74) Mandataire : **CABINET BONNET-THIRION
95 Boulevard Beaumarchais
F-75003 Paris (FR)**

## Description

La présente invention concerne d'une manière générale les opérations à appliquer à une lentille ophtalmique avant de la monter sur une biseauteuse propre à en ramener le contour à celui du cercle ou entourage de monture de lunettes à équiper.

Il faut tout d'abord procéder au "centrage", par rapport à des repères fixes, de cette lentille ophtalmique, en fonction de paramètres prenant en compte les caractéristiques physiologiques de l'individu concerné.

Il faut ensuite procéder à un "glantage", c'est-à-dire à la pose, sur la lentille ophtalmique ainsi centrée, d'un organe de préhension et de maintien, par exemple une simple ventouse ou un gland plastique, propre à sa mise en place et à son maintien sur la biseauteuse à mettre en oeuvre.

Ces opérations peuvent se faire manuellement.

Mais, en pratique, elles se font usuellement à l'aide d'un appareil, ou appareil de centrage ou de glantage, conçu à cet effet.

D'une manière générale, ces appareils de centrage et de glantage comportent tous un socle propre à la réception de la lentille ophtalmique à traiter et au centrage de celle-ci.

Dans des réalisations relativement rudimentaires, mais avantageusement économiques, et c'est le cas par exemple de celles faisant l'objet des brevets français Nos 1.484.799 et 1.548.515, la lentille ophtalmique à traiter est en pratique directement placée sur la ventouse qui doit lui être assujettie, et l'assujettissement correspondant se fait en enfonçant la lentille ophtalmique par rapport à la ventouse après qu'elle ait été convenablement centrée par rapport à celle-ci.

Dans le brevet américain No 2.734.322 cet enfoncement se fait à l'aide d'un bras monté basculant sur un socle.

Il n'est pas possible, avec de tels appareils de centrage et de glantage, de s'assurer, avant le glantage, que, eu égard au centrage qui lui a été appliqué, la lentille ophtalmique à mettre en oeuvre rentre bien dans le contour du cercle ou entourage de monture de lunettes à équiper.

Il n'en est pas de même dans des réalisations plus complexes, et c'est le cas par exemple de celle faisant l'objet du brevet français qui, déposé sous le No 7219694, a été publié sous le No 2.188.182, dans lesquelles, avant le glantage, il est procédé à une comparaison de la lentille ophtalmique à mettre en oeuvre avec un gabarit image du cercle ou entourage de monture de lunettes à équiper, et dans lesquelles, par ailleurs, la pose, sur une telle lentille ophtalmique, de la ventouse, ou, d'une manière plus générale, d'un organe de préhension et de maintien, se fait à l'aide d'un bras qui, monté basculant sur le socle de l'ensemble, est équipé à cet effet d'un support apte à recevoir de manière amovible un tel organe de préhension et de maintien.

Mais, mettant en oeuvre, en pratique, pour la superposition d'une image du contour de la lentille ophtalmique avec celle du gabarit à respecter, des moyens d'éclairage et des moyens optiques tels que des lames semi-réfléchissantes ou autres, ces réalisations complexes sont largement plus coûteuses que les précédentes.

La présente invention a d'une manière générale pour objet un appareil de centrage et de glantage permettant au contraire de s'assurer de manière simple et économique que la lentille ophtalmique à mettre en oeuvre rentre bien dans le contour d'un quelconque gabarit.

Cet appareil de centrage et de glantage est du genre comportant un socle propre à la réception d'une lentille ophtalmique et à son centrage, et, monté basculant sur ledit socle, pour la pose d'un organe de préhension et de maintien sur une telle lentille ophtalmique, un bras équipé d'un support apte à recevoir de manière amovible l'organe de préhension et de maintien à poser, et caractérisé en ce que ledit support, dit ci-après par simple commodité support de ventouse, est porté par un barillet monté rotatif sur le bras qu'il équipe, et en ce que ledit barillet porte également un autre support, ou support de gabarit, apte à recevoir de manière amovible un gabarit à superposer à la lentille ophtalmique avant la pose sur celle-ci d'un organe de préhension et de maintien.

En pratique, le barillet, qui peut par exemple être constitué par un disque transparent, mais qui peut également se réduire à une simple barrette, est susceptible d'occuper, sur ce bras, l'une ou l'autre d'au moins deux positions, l'une pour laquelle c'est le gabarit qui est en action lorsque le bras est basculé, l'autre pour laquelle c'est l'organe de préhension et de maintien.

Dans la première position, le gabarit est directement superposé à la lentille ophtalmique préalablement centrée, et il suffit donc de s'assurer, à vue, que celle-ci rentre bien dans son contour.

Dans la deuxième position, et pour autant que le contrôle précédent ait donné satisfaction, l'organe de préhension et de maintien vient s'appliquer à la lentille ophtalmique et s'y assujettir.

Les caractéristiques et avantages de l'invention ressortiront d'ailleurs de la description qui va suivre, à titre d'exemple, en référence aux dessins schématiques annexés sur lesquels :

la figure 1 est, avec un arrachement local, une vue en élévation d'un appareil de centrage et de glantage suivant l'invention ;

la figure 2 est, à échelle supérieure, une vue partielle en plan, vus de dessous, suivant la flèche II de la figure 1, du barillet et du bras basculant que comporte cet appareil de centrage et de glantage ;

la figure 3 est une vue en coupe axiale de ce barillet et de ce bras basculant, suivant la ligne III-III
de la figure 2 ;

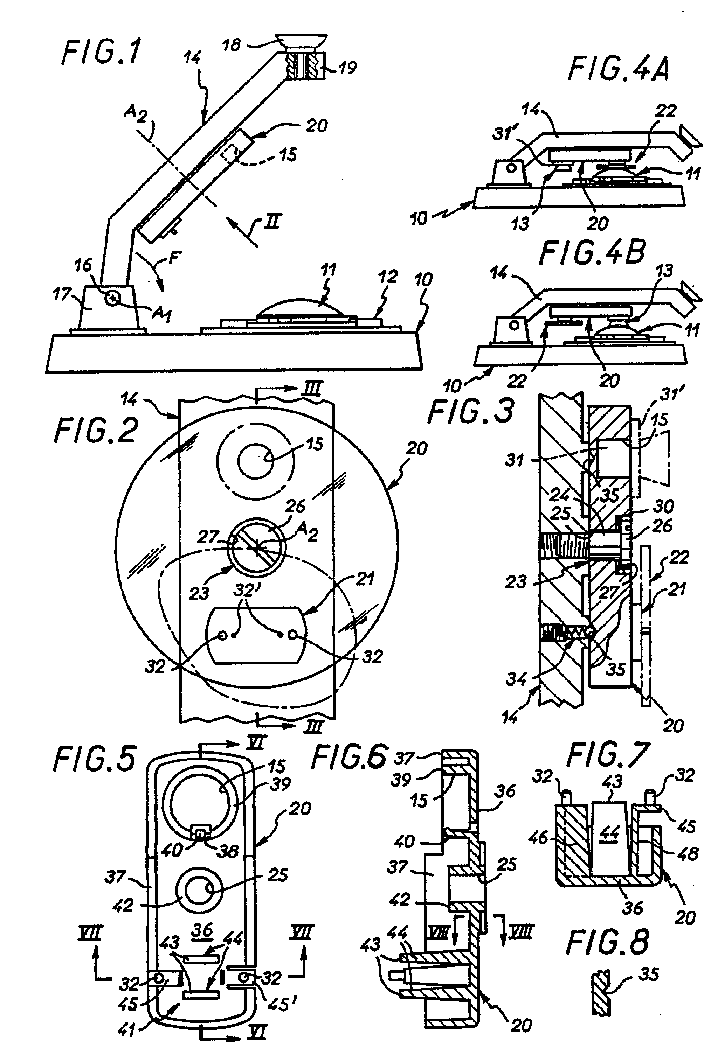

les figures 4A, 4B sont, à échelle réduite, des
vues en élévation, qui, analogues à celle de la
figure 1, illustrent deux phases successives de la
mise en oeuvre de l'appareil de centrage et de
glantage suivant l'invention ;

la figure 5 est, à la manière de la figure 2, une vue
en plan, vu de dessous, du barillet que comporte
l'appareil de centrage et de glantage suivant
l'invention, pour une variante de réalisation de ce
barillet ;

les figures 6 et 7 sont des vues en coupe de ce
barillet, suivant, chacune respectivement, les
lignes VI-VI et VII-VII de la figure 5 ;

la figure 8 en est une vue partielle en coupe, suivant la ligne VIII-VIII de la figure 6 ;

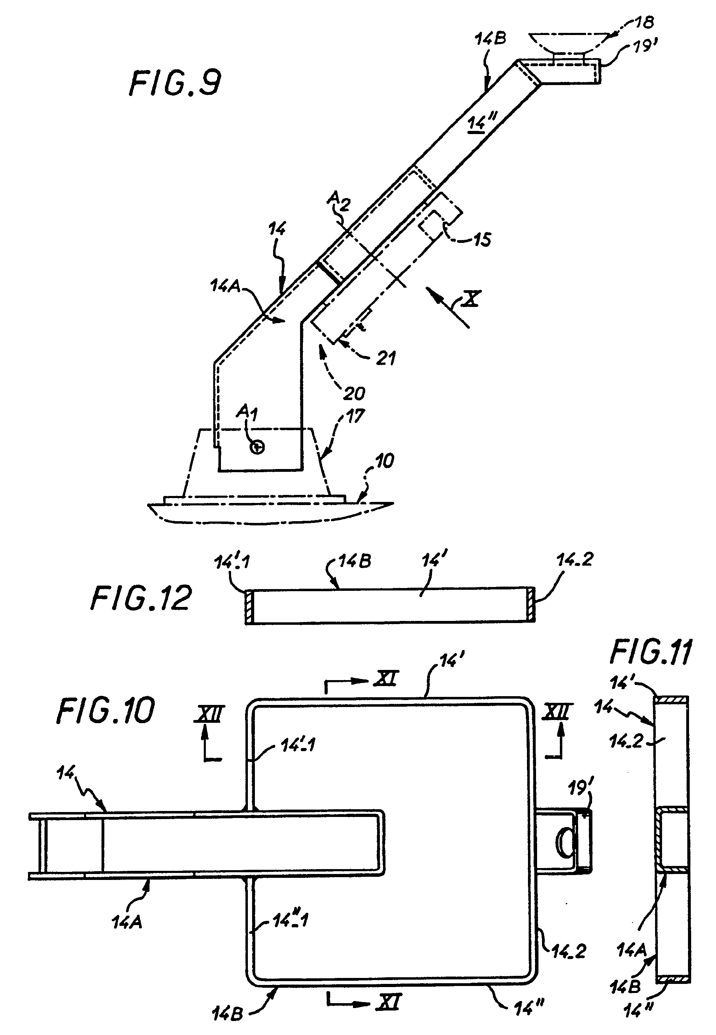

la figure 9 est, à la manière de la figure 1, mais à
échelle supérieure, une vue en élévation, du bras
basculant que comporte l'appareil de centrage et
de glantage suivant l'invention, pour une variante
de réalisation de ce bras basculant ;

la figure 10 en est une vue en plan, suivant la flèche X de la figure 9 ;

les figures 11 et 12 en sont des vues en coupe,
suivant, chacune respectivement, les lignes XI-XI
et XII-XII de la figure 10.

Tel qu'illustré sur ces figures, l'appareil de centrage et de glantage suivant l'invention comporte un
socle 10 propre à la réception d'une lentille ophtalmique 11 et à son centrage.

Par exemple, et tel que représenté, ce socle 10
est équipé, pour ce faire, au-dessus d'un réseau de
repères quadrillés non visible sur les figures, d'une
table de type XY12, sur laquelle la lentille 11 est à
poser, et qui permet de déplacer celle-ci suivant l'une
et/ou l'autre des deux directions orthogonales de ce
réseau de repères quadrillés.

Ces dispositions étant bien connues par elles-
mêmes, et ne faisant pas partie en soi de la présente
invention, elles ne seront pas décrites plus en détail
ici.

L'appareil de centrage et de glantage suivant
l'invention comporte, en outre, monté basculant sur le
socle 10, pour la pose d'un organe de préhension et
de maintien 13 sur une lentille ophtalmique 11, un
bras 14 équipé d'un support 15 apte à recevoir de
manière amovible l'organe de préhension et de maintien 13 à poser.

Par exemple, et tel que représenté, ce bras 14 est
équipé de tourillons 16 par lesquels il est articulé à
une chape 17 portée par le socle 10.

Soit A1, tel que schématisé par une croix sur la
figure 1, l'axe de basculement de ce bras 14 vis-à-vis
de ce socle 10.

Il s'étend parallèlement au socle 10.

En pratique, la chape 17 étant disposée à l'écart de la table 12, le bras 14, coudé à cet effet, s'étend
en potence au-dessus de cette table 12, et, à son
extrémité, il porte, à l'aplomb de celle-ci, un oeilleton
18 propre à éliminer tout parallaxe lors de l'observation de la lentille 11 placée sur une telle table 12.

Pour sa configuration déployée d'attente, et tel
que représenté à la figure 1, l'extrémité 19 du bras 14
portant ainsi un oeilleton 18 s'étend sensiblement à
l'horizontale, parallèlement au socle 10.

Bien entendu, il peut être prévu des moyens de
butée ou d'encliquetage définissant de manière positive cette position déployée d'attente du bras 14, et il
peut également être prévu des moyens élastiques le
sollicitant en permanence en direction de celle-ci.

Ces dispositions relevant de l'homme de l'art, et
ne faisant pas partie par elles-mêmes de la présente
invention, elles ne seront pas décrites ici.

Suivant l'invention, le support 15 prévu sur un tel
bras 14 pour l'organe de préhension et de maintien 13
à poser, dit ici par simple commodité support de ventouse, est porté par un barillet 20, qui est monté rotatif
sur ce bras 14, et qui porte également un autre support 21, ou support de gabarit, apte à recevoir de
manière amovible un gabarit 22 à superposer à la lentille ophtalmique 11 avant la pose sur celle-ci d'un tel
organe de préhension et de maintien 13.

Dans la forme de réalisation représentée sur les
figures 1 à 3, le barillet 20 se présente sous la forme
d'un disque transparent, qui, superposé au bras 14
qu'il équipe, sur la face inférieure de celui-ci, déborde,
latéralement, très largement, de ce bras 14.

En pratique, il est rapporté sur celui-ci par une vis
23, dont le fût traverse, à frottement doux, par un tronçon lisse 24, un perçage 25 prévu à cet effet dans sa
zone médiane, et dont la tête 26 est logée dans un
lamage 27 prévu à cet effet à sa surface.

De préférence, et tel que représenté, entre le fond
de ce lamage 27 et la tête 26 de la vis 23 est disposée
une rondelle élastique à action axiale 30, par exemple
une simple rondelle Belleville, pour que le disque
constituant ainsi le barillet 20 s'applique sans jeu
contre le bras 14 qui le porte.

Soit A2 l'axe de rotation de ce barillet 20 sur le
bras 14.

Cet axe A2 est schématisé en traits interrompus
sur la figure 1, et il est représenté par une croix sur la
figure 2.

En pratique, cet axe A2 s'étend dans un plan perpendiculaire au socle 10.

Il est donc orthogonal à l'axe de basculement A1
du bras 14.

Dans la forme de mise en oeuvre représentée,
l'organe de préhension et de maintien 13 est une ventouse.

Ainsi qu'on le sait, une telle ventouse est solidaire
d'un embout 31, globalement cylindrique, qui en permet la manipulation et la fixation sur la biseauteuse à
mettre en oeuvre, avec, éventuellement, et tel que représenté, entre cet embout 31 et la ventouse, une collerette 31'.

Le support de ventouse 15 dont est équipé le barillet 20 se réduit, dans ce cas, et tel que représenté, à un simple puits propre à la réception de l'embout 31.

L'engagement de cet embout 31 dans un tel puits peut se faire à frottement doux.

Ainsi qu'il apparaîtra ultérieurement, il peut, cependant, être associé à ce puits des moyens d'encliquetage propres à retenir de manière débrayable l'embout 31 qui y est engagé.

Il peut également y être associé des moyens de serrage mécanique, vis à pointeau par exemple, propres, si désiré, à y affermir une telle retenue.

Dans la forme de réalisation représentée sur les figures 1 à 3, le support de gabarit 21 se présente sous la forme d'une platine présente en saillie à la surface du barillet 20, et il porte, lui-même, en saillie, pour la réception du gabarit 22, parallèlement l'un à l'autre, et à distance l'un de l'autre, au moins une paire d'ergots 32.

Dans la forme de réalisation représentée, deux paires d'ergots 32, 32' sont ainsi prévues, pour la mise en oeuvre possible de deux types différents de gabarit 22.

Ainsi qu'il apparaîtra ci-après, pour chaque paire d'ergots 32, 32', l'un au moins des ergots, ou son montage, est élastiquement déformable, pour un engagement à force du gabarit 22 correspondant, et ainsi une retenue convenable de celui-ci.

En pratique, le support de ventouse 15 et le support de gabarit 21 sont disposés en positions diamétralement opposées l'un par rapport à l'autre sur le barillet 20 qui les porte.

Dans la forme de réalisation représentée sur les figures 1 à 3, ce barillet 20, indépendamment du puits constituant le support de ventouse 15 qui l'équipe, est massif.

De préférence, entre ce barillet 20 et le bras 14 qui le porte interviennent des moyens d'indexation 34.

Dans la forme de réalisation représentée, il s'agit de moyens d'indexation à bille portés par le bras 14, et, en correspondance avec le support de ventouse 15 et le support de gabarit 21, le barillet 20 présente, en creux sur sa surface tournée vers le bras 14, pour coopération avec la bille correspondante, aux extrémités d'un même diamètre, deux logements 35.

Le barillet 20 peut ainsi être arrêté de manière débrayable dans l'une ou l'autre de deux positions angulaires distinctes autour de son axe de rotation A2, l'une correspondant au support de ventouse 15, l'autre correspondant au support de gabarit 21.

Pour le traitement d'une lentille ophtalmique 11, il est procédé d'abord, le bras 14 étant en position déployée d'attente, au centrage, à l'aide de la table 12, et à travers l'oeilleton 18, de cette lentille ophtalmique 11, en tenant compte des paramètres à respecter, tels l'écart pupillaire de l'individu concerné et la hauteur de montage à pratiquer eu égard à sa vision de loin.

Il est procédé, ensuite, à la mise en place d'un gabarit 22 sur le support de gabarit 21 du barillet 20, et, après rotation, si nécessaire, de ce barillet 20 autour de son axe A2, de manière à l'amener dans celle de ses positions pour laquelle le support de gabarit 21 est le plus proche de l'oeilleton 18, il est procédé au rabattement, autour de son axe A1, du bras 14, suivant la flèche F de la figure 1.

Tel que schématisé par la figure 4A, ce rabattement du bras 14 conduit le gabarit 22 porté par le barillet 20 à se superposer à la lentille ophtalmique 11 précédemment centrée.

Il suffit donc, dès lors, à l'opérateur, de contrôler, à vue, que, en égard au centrage de cette lentille ophtalmique 11, celle-ci reste encore tout entière dans le contour du gabarit 22.

Il est procédé, ensuite, après relèvement du bras 14, à la mise en place d'un organe de préhension et de maintien 13 dans le support de ventouse 15 du barillet 20, puis, après rotation d'un demi-tour de ce barillet 20 pour l'amener dans celle de ses positions pour laquelle c'est à son tour le support de ventouse 15 qui est le plus proche de l'oeilleton 18, il est procédé à nouveau au rabattement du bras 14.

Tel que schématisé à la figure 4B, ce rabattement du bras 14 conduit l'organe de préhension et de maintien 13 à s'appliquer à la lentille 11, et, en pratique, à s'y assujettir.

Dans la variante de réalisation illustrée par les figures 5 à 8, le barillet 20 se présente sous la forme d'une barrette, et il présente donc un contour lui permettant, pour l'une et l'autre de ses positions angulaires utiles, de se fondre, avantageusement, dans le contour du bras 14 qui le porte, sans déborder latéralement de celui-ci.

Plus précisément, dans la forme de réalisation représentée, le barillet 20 se présente, dans ce cas, sous la forme d'une barrette creusée en cuvette.

Il comporte donc un fond 36 et un bord périphérique 37.

Le puits constituant le support de ventouse 15 est alors délimité par une paroi globalement cylindrique 39 qui fait saillie sur le fond 36, à l'une des extrémités de celui-ci, en s'étendant à niveau avec une portion du bord périphérique 37 qui est en retrait par rapport à la partie courante de celui-ci.

A la faveur d'une césure 38 de cette paroi globalement cylindrique 39, s'étend, d'un seul tenant avec le fond 36, une languette élastiquement déformable 40, dont l'extrémité libre, munie d'un bourrelet, fait légèrement saillie dans le puits 15, pour constituer des moyens d'encliquetage propres à y retenir de manière débrayable l'organe de préhension et de maintien 13 à poser.

Dans la partie centrale du fond 36, le perçage 25 se trouve lui-même défini par une paroi globalement cylindrique 42 en saillie sur ce fond 36.

Quant au support de gabarit 21, il se trouve fractionné, dans cette forme de réalisation, en quatre secteurs distincts.

Il y a tout d'abord, deux secteurs 43, qui, alignés dans le sens d'allongement de la barrette constituant le barillet 20, suivant la ligne médiane de celle-ci, sont chacun respectivement formés, au-delà de la tranche du bord périphérique 37 de cette barrette, par la tranche libre de deux piliers 44 venus d'un seul tenant du fond 36 de celle-ci.

Il y a, ensuite, en croix avec les précédents, deux secteurs 45, 45', porteurs, chacun respectivement, d'un ergot 32.

A la manière des secteurs 43 précédents, le secteur 45 est formé par la tranche libre d'un pilier 46 venu d'un seul tenant du fond 36 de la barrette.

Le secteur 45', par contre, est formé par un retour en équerre prévu en saillie à l'extrémité d'une languette élastiquement déformable 48 elle-même venue d'un seul tenant du fond 36, ce qui assure un montage élastiquement déformable pour l'ergot 32 correspondant.

En pratique, dans la forme de réalisation représentée, les secteurs 45, 45' s'étendent légèrement en retrait par rapport aux secteurs 43, en sorte que seuls ceux-ci assurent l'appui d'un gabarit 22 lorsqu'un tel gabarit 22 est engagé sur les ergots 32.

Quant aux logements 35 prévus par ailleurs sur la face du barillet 20 ainsi constitué tournée vers le bras 14 qui le porte, il s'agit, dans cette forme de réalisation, de rainures à profil en V qui, alignées suivant un diamètre du perçage 25 correspondant, s'étendent suivant le sens d'allongement de la barrette constituant alors ce barillet 20.

La mise en oeuvre de celui-ci se fait comme précédemment.

Dans la variante de réalisation représentée sur les figures 9 à 12, le bras 14 porteur du barillet 20 est scindé, sur une portion au moins de sa longueur, en deux branches 14', 14".

En pratique, dans cette forme de réalisation, ce bras 14 comporte une partie courante 14A, par laquelle il est articulé, comme précédemment, au socle 10, et un cadre 14B, auquel appartiennent ses deux branches 14', 14", et qui, par l'intermédiaire d'une console 19' ajourée disposée dans le prolongement de la partie courante 14A, porte l'oeilleton 18 associé.

La partie courante 14A pénètre dans le cadre 14B, jusqu'à sensiblement la zone centrale de celui-ci.

Dans la forme de réalisation représentée, la partie courante 14A est en forme de cuvette.

Corollairement dans cette forme de réalisation, le cadre 14B a ses flancs parallèles à ceux de la cuvette constituant la partie courante 14A, et il s'agit d'un cadre globalement quadrangulaire, et en pratique carré, dont les angles sont arrondis par des congés.

Outre les branches 14', 14", qui s'étendent longitudinalement parallèlement l'une à l'autre, et parallèlement à la partie courante 14A, ce cadre 14B comporte deux traverses, l'une scindée en deux tronçons 14'-1, 14"-1, par laquelle il se referme sur ladite partie courante 14A, l'autre, 14-2, par laquelle, à distance de l'extrémité de cette partie courante 14A, il porte la console 19'.

L'ensemble peut, par exemple, être réalisé en tôle mécano-soudée ; il peut également être réalisé en matière synthétique moulée.

Quoi qu'il en soit, le bras 14 ainsi constitué est équipé d'un barillet 20 du type par exemple de l'un ou l'autre de ceux précédemment décrits.

Par exemple, sur sa partie courante 14A peut être rapporté, à cet effet, par emboîtement, soudage ou autre, une platine propre au montage, à pivotement, d'un tel barillet 20.

Ainsi qu'il est aisé de le comprendre, lors de la superposition d'un gabarit à la lentille ophtalmique à traiter, le cadre 14B laisse avantageusement à vue, entre ses branches 14', 14", la partie au moins de ce gabarit qui déborde de la partie courante 14A, en facilitant ainsi l'affichage d'une hauteur à partir de la base correspondante de ce gabarit.

## Revendications

1. Appareil de centrage et de glantage pour lentille ophtalmique, du genre comportant, un socle (10) propre à la réception d'une lentille ophtalmique (11) et à son centrage, et, monté basculant sur ledit socle (10), pour la pose d'un organe de préhension et de maintien (13) sur une telle lentille ophtalmique (11), un bras (14) équipé d'un support (15) apte à recevoir de manière amovible l'organe de préhension et de maintien (13) à poser, caractérisé en ce que ledit support (15), dit ci-après par simple commodité support de ventouse, est porté par un barillet (20) monté rotatif sur le bras (14) qu'il équipe, et en ce que ledit barillet (20) porte également un autre support (21), ou support de gabarit, apte à recevoir de manière amovible un gabarit (22) à superposer à la lentille ophtalmique (11) avant la pose sur celle-ci d'un organe de préhension et de maintien (13).

2. Appareil de centrage et de glantage suivant la revendication 1, caractérisé en ce que, sur le barillet (20) qui les porte, le support de ventouse (15) et le support de gabarit (21) sont disposés en positions diamétralement opposées l'un par rapport à l'autre.

3. Appareil de centrage et de glantage suivant l'une quelconque des revendications 1, 2, caractérisé en ce que l'axe de basculement (A1) du bras (14) porteur du barillet (20) et l'axe de rotation (A2) de ce barillet (20) sur ce bras (14) sont orthogonaux.

4. Appareil de centrage et de glantage suivant l'une quelconque des revendications 1 à 3, caractérisé en ce que, entre le bras (14) porteur du barillet (20) et ledit barillet (20), interviennent des moyens d'indexation (34).

5. Appareil de centrage et de glantage suivant l'une quelconque des revendications 1 à 4, caractérisé en ce que le barillet (20) se présente sous la forme d'un disque transparent.

6. Appareil de centrage et de glantage suivant l'une quelconque des revendications 1 à 4, caractérisé en ce que le barillet (20) se présente sous la forme d'une barrette.

7. Appareil de centrage et de glantage suivant l'une quelconque des revendications 1 à 6, caractérisé en ce que le support de ventouse (15) se réduit à un puits.

8. Appareil de centrage et de glantage suivant l'une quelconque des revendications 1 à 7, caractérisé en ce que le support de gabarit (21) présente en saillie au moins une paire d'ergots (32, 32') dont l'un au moins, ou son montage, est élastiquement déformable.

9. Appareil de centrage et de glantage suivant l'une quelconque des revendications 1 à 8, caractérisé en ce que, sur une portion de sa longueur, au moins, le bras (14) porteur du barillet (20) est scindé en deux branches (14', 14").

10. Appareil de centrage et de glantage suivant la revendication 9, caractérisé en ce que le bras (14) comporte une partie courante (14A) par laquelle il est articulé au socle (10) et porte le barillet (20) et un cadre (14B) auquel appartiennent se deux branches (14', 14") et que porte un oeilleton (18).

**Patentansprüche**

1. Vorrichtung zum Zentrieren und Aufkitten eines Brillenglases mit einem Sockel bzw. Ständer (10), der zur Aufnahme eines Brillenglases (11) und dessen Zentrierung geeignet ist, und einem Arm (14), der auf dem Ständer (10) kippbar angebracht ist, zum Auflegen eines Greif- und Halteorgans (13) auf ein solches Brillenglas (11) dient und mit einem Träger (15) ausgerüstet ist, der in abnehmbarer Weise das Greif- und Halteorgan (13) zum Auflegen aufnimmt, dadurch **gekennzeichnet,** daß der Träger (15), nachfolgend Saugnapfträger genannt von einer drehtellerartigen Einrichtung (20) getragen wird, die an dem Arm (14) drehbar angebracht ist, mit dem er ausgerüstet ist, und daß die drehtellerartige Einrichtung (20) gleichfalls einen weiteren Träger (21) bzw. Modellträger trägt, der in abnehmbarer Weise ein Modell (22) aufnehmen kann, welches auf das Brillenglas (11) aufgebracht werden kann vor dem Aufbringen eines Greif- und Halteorgans (13) auf dieses.

2. Vorrichtung nach Anspruch 1, dadurch gekennzeichnet, daß der Saugnapfträger (15) und der Modellträger (21) auf der drehtellerartige Einrichtung (20) in einander gegenüberliegenden Positionen angeordnet sind.

3. Vorrichtung nach Anspruch 1 oder 2, dadurch **gekennzeichnet,** daß die Kippachse (A1) des Armes (14) zum Tragen der drehtellerartigen Einrichtung (20) und die Drehachse (A2) der drehtellerartigen Einrichtung (20) auf dem Arm (14) rechtwinklig zueinander angeordnet sind.

4. Vorrichtung nach einem der Ansprüche 1 bis 3, dadurch **gekennzeichnet,** daß Indexierungsmittel bzw. Schrittschaltmittel (34) zwischen dem Arm (14) zum Tragen dieser drehtellerartigen Einrichtung (20) und dieser Einrichtung (20) eingeschaltet sind.

5. Vorrichtung nach einem der Ansprüche 1 bis 4, dadurch **gekennzeichnet,** daß die drehtellerartige Einrichtung (20) in Form einer transparenten Scheibe vorgesehen ist.

6. Vorrichtung nach einem der Ansprüche 1 bis 4, dadurch **gekennzeichnet,** daß der drehtellerartige Einrichtung (20) die Form eines Stabes aufweist.

7. Vorrichtung nach einem der Ansprüche 1 bis 6, dadurch **gekennzeichnet,** daß der Saugnapfträger (15) lediglich ein Saugnapf ist.

8. Vorrichtung nach einem der Ansprüche 1 bis 7, dadurch **gekennzeichnet,** daß der Modellträger (21) zumindest ein Paar von vorspringenden Zapfen (32, 32') aufweist, von denen wenigstens einer oder seine Halterung elastisch verformbar ist.

9. Vorrichtung nach einem der Ansprüche 1 bis 8, dadurch **gekennzeichnet,** daß der Arm (14) zum Tragen der drehtellerartigen Einrichtung (20) wenigstens über einen Teil seiner Länge in zwei Armteile (14', 14") unterteilt ist.

10. Vorrichtung nach Anspruch 9, dadurch **gekennzeichnet,** daß der Arm (14) einen Laufteil bzw. Endteil (14A) umfaßt, um den er am Sockel (10) angelenkt ist, und die drehtellerartige Einrichtung (20) und einen Rahmen (14B) trägt, zu welchem die zwei Armteile (14', 14") gehören und der eine Okularblende bzw. ein Okular (18) trägt.

**Claims**

1. A centering and blocking apparatus for an opthalmic lens of the type comprising a base (10) for receiving an opthalmic lens (11) and for centering thereof and, mounted pivotably on said base (10), for placing a gripping and holding member (13) on such an opthalmic lens (11), an arm (14) fitted with a support (15) for removably receiving the gripping and holding member (13) to be placed on the lens, characterised in that said support (15), referred to hereinafter for the sake of convenience as the suction cup support, is carried by a drum (20) mounted rotatably on the arm (14) on which it is fitted, and that said drum (20) also carries another support (21) or template support for removably receiving a template (22) to be superposed on the opthalmic lens (11) before a gripping and holding member (13) is placed on the lens.

2. A centering and blocking apparatus according to claim 1 characterised in that the suction cup support (15) and the template support (21) are disposed on the drum (20) which carries them, at mutually diametrally opposite positions.

3. A centering and blocking apparatus according to either one of claims 1 and 2 characterised in that the pivot axis (A1) of the arm (14) carrying the drum (20) and the axis of rotation (A2) of the drum (20) on the arm (14) are orthogonal.

4. A centering and blocking apparatus according to any one of claims 1 to 3 characterised in that indexing means (34) are disposed between the arm (14) carrying the drum (20) and said drum (20).

5. A centering and blocking apparatus according to any one of claims 1 to 4 characterised in that the drum (20) is in the form of a transparent disc.

6. A centering and blocking apparatus according to any one of claims 1 to 4 characterised in that the drum (20) is in the form of a bar member.

7. A centering and blocking apparatus according to any one of claims 1 to 6 characterised in that the suction cup support (15) is reduced to a hole.

8. A centering and blocking apparatus according to any one of claims 1 to 7 characterised in that the template support (21) has in projecting relationship at least one pair of lugs (32, 32') of which one at least, or the mounting thereof, is elastically deformable.

9. A centering and blocking apparatus according to any one of claims 1 to 8 characterised in that over a portion of its length at least the arm (14) carrying the drum (20) is divided into two limbs (14', 14").

10. A centering and blocking apparatus according to claim 9 characterised in that the arm (14) comprises a body portion (14A) by which it is pivotally connected to the base (10) and carries the drum (20) and a frame (14B) to which its two limbs (14', 14") belong and which carries an eyepiece (18).

FIG.1

FIG.4A

FIG.4B

FIG.2

FIG.3

FIG.5

FIG.6

FIG.7

FIG.8

*FIG.9*

14B

18

19'

14"

A2

15

14

14A

X

21

20

A1

17

10

*FIG.12*

14'.1

14B

14'

14.2

*FIG.11*

14'

14

14.2

*FIG.10*

XII

XI

14'

14'.1

14

19'

14A

14".1

14.2

14B

XI

14"

14A

14B

14"